# EUROPEAN PATENT SPECIFICATION

(11) **EP 0 835 581 B1**
(45) Date of publication and mention of the grant of the patent: **06.09.2000**
(21) Application number: 95923469.1
(22) Date of filing: 30.06.1995
(51) Int. Cl.: H04N 1/32, H04N 1/00

(54) **COMMUNICATION METHOD AND APPARATUS**
ÜBERTRAGUNGSVERFAHREN UND -VORRICHTUNG
PROCEDE ET APPAREIL DE COMMUNICATION

(43) Date of publication of application: 15.04.1998
(60) Divisional application: 99204426.3
(73) Proprietor: Inmarsat Ltd., London EC1Y 1AX (GB)
(72) Inventor: GARSTANG, Brian, London NW3 (GB); FELDMAN, Howard, Ray, Kenton Middlesex HA3 8JE (GB)
(74) Representative: Cross, James Peter Archibald
(86) International application number: GB9501548
(87) International publication number: WO9702697

(56) References cited:
- EP-A- 0 552 367
- WO-A-94/15433
- IEEE TRANSACTIONS ON VEHICULAR TECHNOLOGY, vol. 43, no. 3, August 1994 NEW YORK, US, pages 617-625, XP 000466795 DIMOLITSAS, S. ET AL. 'Facsimile Transmission Over Digital Satellite Land-Mobile Channels'

## Description

### Technical Field

The present invention relates to a facsimile interface apparatus and method for broadcast communication, particularly, but not exclusively via a satellite link.

In a broadcast facsimile communication, a transmitting facsimile terminal transmits facsimile data to more than one receiving facsimile terminals, in contrast to the "one-to-one" mode in which a facsimile terminal sends facsimile data to a single facsimile terminal. Standard facsimile terminals are exclusively designed for "one-to-one" mode.

### Background Art

In one method of facsimile "one-to-many" communication, as described for example in FR-A-90 08169, US-A-5,040,077 and US-A-4,652,934, a calling facsimile terminal stores facsimile data in a memory and successively calls each of the facsimile terminals to which the data are to be sent, so that the communication takes place in serial one-to-one mode.

A known method of facsimile broadcasting uses specially adapted facsimile receivers which receive facsimile data multiplexed with television sound channels, transmitted by satellite from a television audio transmitter. One example of this method is described in the paper "Multi-Address Facsimile System Using Communication Satellite" by Yasumoto et al., IEEE 1990 International Conference on Consumer Electronics, 8 June 1990, Rosemont, Illinois, Pages 308 and 309.

However, the serial one-to-one approach is impractical if a large number of facsimile terminals are to be called, while the above broadcasting method requires dedicated facsimile terminals, which are not suitable for the usual one-to-one mode of communication via a telephone link.

In conventional facsimile terminals designed for one-to-one communication over a telephone link, standard protocols are adopted to allow communication between terminals of different types. Examples of such protocols are those defined by the former International Telegraph and Telephone Consultative Committee (CCITT), now the International Telecommunications Union - Telecommunications Standardization (ITU-T) under recommendations T.3 and T.4, known respectively as the Group II and Group III facsimile protocols. Recommendation T.30 defines a common protocol for Group II and III facsimile equipment for communication over a telephone network.

If a one-to-one facsimile communication takes place over a cellular link, an interface is connected between each facsimile terminal and the cellular link and the interface may generate Recommendation T.30 commands to adapt the timing of each facsimile terminal to the cellular link, as disclosed for example in WO-A-92/02100.

However, recommendation T.30 requires the called facsimile terminal to send signals to the calling facsimile terminal, for example to identify the called facsimile terminal, to indicate that it is ready to receive facsimile data and to confirm receipt of control signals. This type of protocol is not designed to be used in facsimile broadcast mode, in which the calling facsimile terminal cannot receive signals from the called facsimile terminals.

The document EP-A-0552367 discloses a facsimile satellite broadcast system using some of the protocol elements of recommendation T.30, but does not describe how these can be adapted to a broadcast system. The article "Facsimile Transmission Over Digital Satellite Land-Mobile Channels" by Dimolitsas et al, IEEE Transactions on Vehicular Technology 43 (1994) August, No. 3, Part 1, discloses a facsimile interface unit (FIU) which permits facsimile broadcasting to mobile terminals. FIU flag sequences are used to keep the facsimile terminals on-line.

The document WO-A-94 15433 discloses protocol convertors associated with mobile facsimile devices, which interface with a digital radio frequency communication system using a radio link protocol to ensure the error free transmission of facsimile data.

### Disclosure of the Invention

The present invention provides apparatus according to claim 1 and/or a method according to claim 7.

According to an embodiment of the present invention, there is provided a facsimile interface apparatus for receiving facsimile broadcast information and for performing duplex communication with a receiving facsimile terminal under a protocol supported by the receiving facsimile terminal, which is arranged to send a signal to the facsimile terminal to prevent the facsimile terminal from terminating reception when an expected broadcast signal is not received. An advantage of these functions is that the broadcast signal may be delayed to ensure that other receiving facsimile terminals have reached the same stage in the protocol, while preventing the facsimile terminal from disconnecting.

The present invention extends to the methods performed by the facsimile interface apparatus.

The interface apparatus may be adapted for connection to a satellite link or a terrestrial link, such as a cellular GSM radio link.

### Brief Description of the Drawings

Specific embodiments of the present invention will now be described with reference to the accompanying drawings, in which:
Figure 1 is a diagram of a broadcast connection between a transmitting facsimile terminal and a plurality of receiving facsimile terminals via a satellite link;
Figure 2 is a block diagram of the transmitting facsimile terminal, the transmitting facsimile interface unit and the transmitting earth station of Figure 1;
Figure 3 is a block diagram of one of the receiving facsimile terminals, one of the receiving facsimile interface units and one of the receiving earth stations of Figure 1;
Figure 4 is a time chart showing an example of a broadcast communication, according to a protocol, between the transmitting facsimile terminal, the transmitting interface unit, one of the receiving interface units and one of the receiving facsimile terminals;
Figure 5 is a flow chart of the operation of the transmitting facsimile interface unit according to the protocol; and
Figure 6 is a flow chart of the operation of one of the receiving facsimile interface units according to the protocol.

### Modes of Carrying Out the Invention

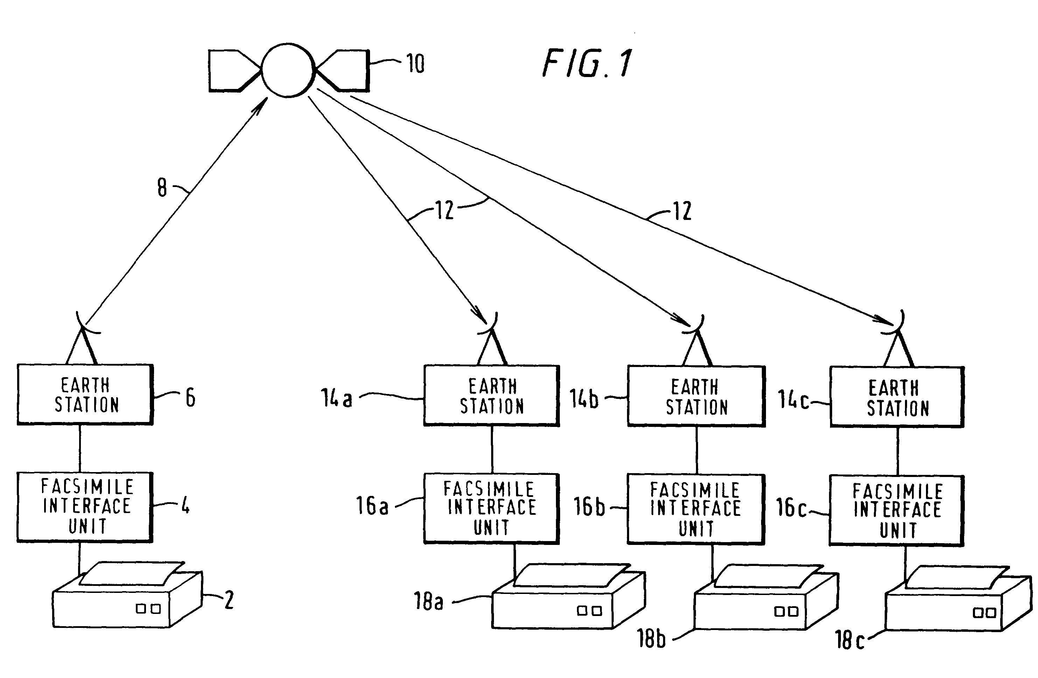

In Figure 1, a transmitting facsimile terminal 2, for example a conventional Group 3 facsimile terminal, is connected to a facsimile interface unit (FIU) 4, which converts analog signals from the transmitting facsimile terminal 2 into digital signals suitable for transmission by an earth station 6 over a digital satellite link. The earth station 6 modulates the digital signals and transmits the modulated radio frequency (RF) signals 8 to a communication satellite 10. The communication satellite 10 retransmits the RF signals 8, preferably at a different frequency to avoid interference, and the retransmitted signals 12 are broadcast so that they may be received by receiving earth stations 14a, 14b, 14c. Each receiving earth station 14 demodulates the signals 12 to produce digital signals which are passed to the corresponding FIU 16a; 16b; 16c. Each receiving FIU 16 converts the digital signals to analog signals and transmits the analog signals to a corresponding receiving facsimile terminal 18a, 18b, 18c. In this way, facsimile messages may be received by any earth station 14 which is in view of the satellite 10. Preferably, the earth stations 6 and 14 are able to transmit as well as receive RF signals, and the FIUs 4 and 16 are also operable in a duplex mode for one-to-one communication, as described for example in the applicant's UK patent application no. 9402501.2 published under the number GB-A-2 286 739.

Alternatively, the FIU 4 may be dedicated to broadcast transmission and the FIU 16 may be dedicated to broadcast reception. Each of the earth stations 6, 14 may be fixed or mobile, but in a preferred arrangement the transmitting earth station 6 is fixed and the earth stations 14 are mobile or temporary installations. Each FIU 4,16 may be integrated with its respective earth station 6,14.

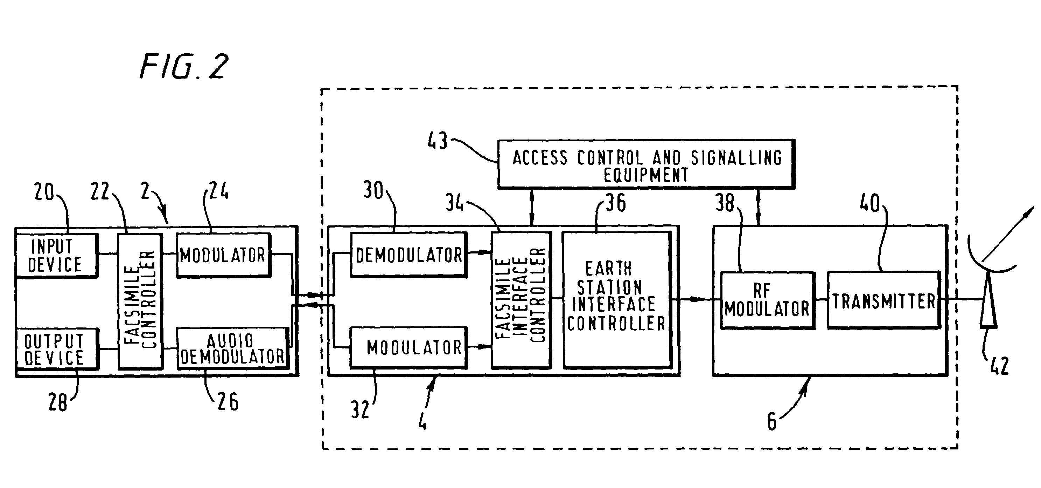

The functional elements of the transmitting terminal 2, the transmitting FIU 4 and the earth station 6 are shown in Figure 2. The facsimile terminal 2 includes an input device 20 (such as a scanner for scanning documents or an input port connected to a computer which generates image data). Image data from the input device 20 is received by a facsimile controller 22, for example a microprocessor, which encodes the facsimile data, for example according to the Huffmann codes defined in ITU-T Recommendation T.4. The facsimile controller 22 also performs call set-up, pre-message procedure, message transmission, post-message procedure and call release, by generating the signals required under recommendation T.30 in conventional fashion. A modulator 24 modulates the signals from the facsimile controller 22 to produce an analog signal suitable for transmission through a telephone link.

The facsimile terminal 2 also includes an audio demodulator 26 which is arranged to receive analog signals from a telephone link and demodulate them to produce digital data, which is supplied to the facsimile controller 22. The digital data may comprise message data or control signals. The facsimile controller 22 decodes facsimile coded signals and controls an output device 28 (such as a printer or an output port to a computer).

The transmitting terminal 2 is connected (either directly or through a public service telephone network (PSTN) or other network) to the FIU 4, which has a demodulator 30 for demodulating analog signals from the facsimile terminal 2 to produce digital signals and a modulator 32 for producing analog signals for transmission to the facsimile terminal 2.

The facsimile interface unit 4 includes a facsimile interface controller 34, for example a microprocessor, which receives signals from the demodulator 30 and sends signals to the modulator 32. The facsimile interface controller 34 is functionally arranged to simulate the operation of a receiving facsimile terminal and to generate the appropriate signals for transmission to the transmitting terminal 2. The facsimile interface controller 34 outputs signals to an earth station interface controller 36 which outputs signals to the earth station 6. Since the earth station 6, when in broadcast mode, sends but does not receive signals over the satellite link, the earth station interface controller 36 provides only a simplex interface to the earth station 6 in this mode.

The signals transmitted by the earth station interface controller 36 are received by a radio frequency (RF) modulator 38 which modulates the signals for transmission by a transmitter 40 coupled to an antenna 42. The antenna 42 may be a directional antenna directed to the satellite 10 through which the broadcast is made.

The initial set-up and the final clearing of a call are controlled by conventional access control and signalling equipment (ACSE) 43 connected to the FIU 4 and earth station 6. As the ACSE is conventional and well known to the skilled reader, and moreover plays no part in the implementation of the T.30 protocol, it will not be described in detail.

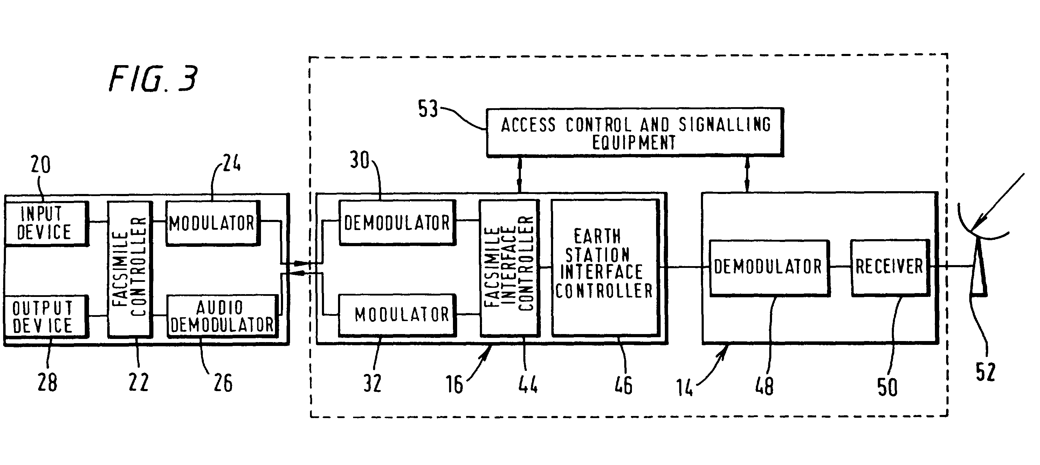

The functional elements of the receiving earth station 14, the receiving FIU 16 and the receiving facsimile terminal 18 are shown in Figure 3. In the receiving earth station 14, a receiver 50 coupled to an antenna 52 receives signals broadcast by the satellite 10, which are demodulated by a demodulator 48 and the digital signals are passed to the receiving FIU 16, in which the signals are input to a receiving earth station interface controller 46. The receiving earth station interface controller 46 operates in a simplex receive-only mode, and supplies signals to a receiving facsimile interface controller 44.

The receiving facsimile interface controller 44 simulates the operation of a transmitting facsimile terminal and exchanges signals with the receiving facsimile terminal 18 by means of a modulator 30 and demodulator 32, similar or identical to those present in the transmitting FIU 4. The functional features of the receiving facsimile terminal 18 are similar to those of the transmitting facsimile terminal 2 and their description will not be repeated.

The receiving earth station 14 and FIU 16 are controlled by ACSE 53, which performs those functions specific to the satellite link but does not play a part in implementing the T.30 protocol.

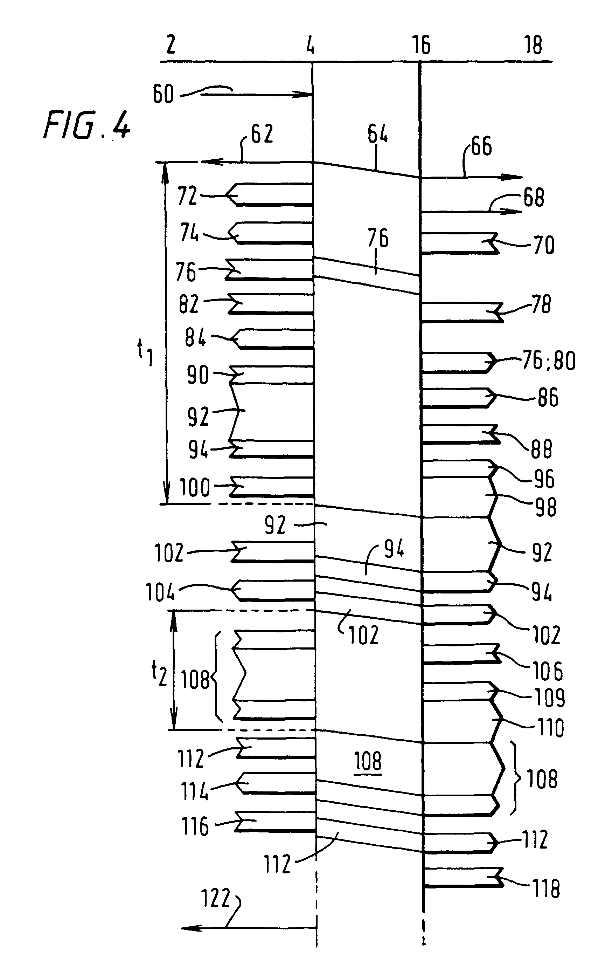

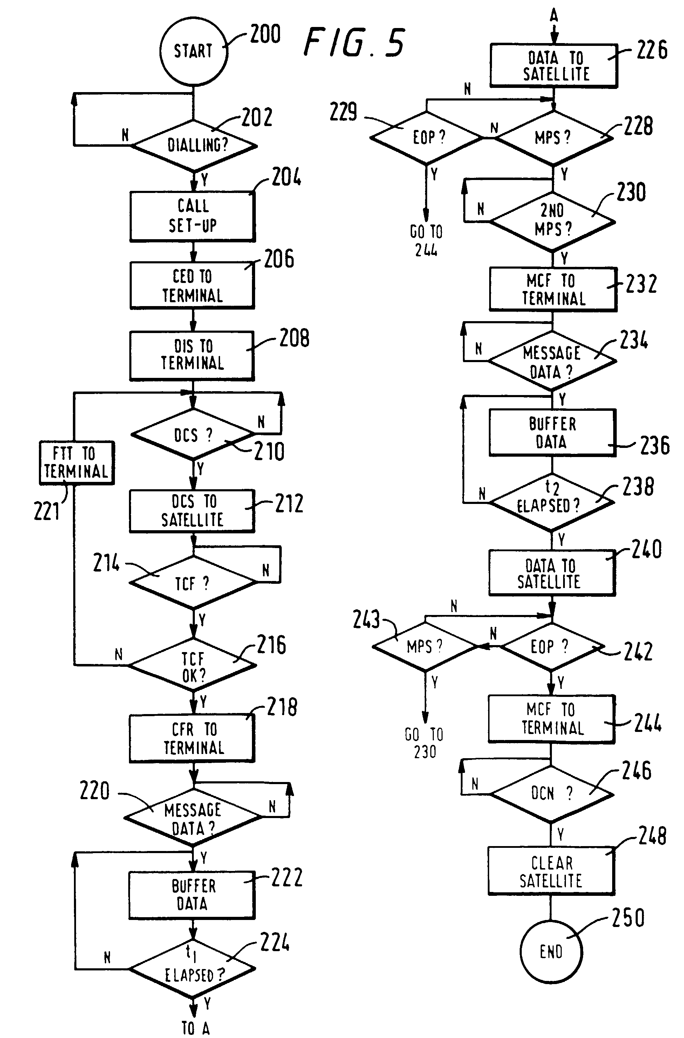

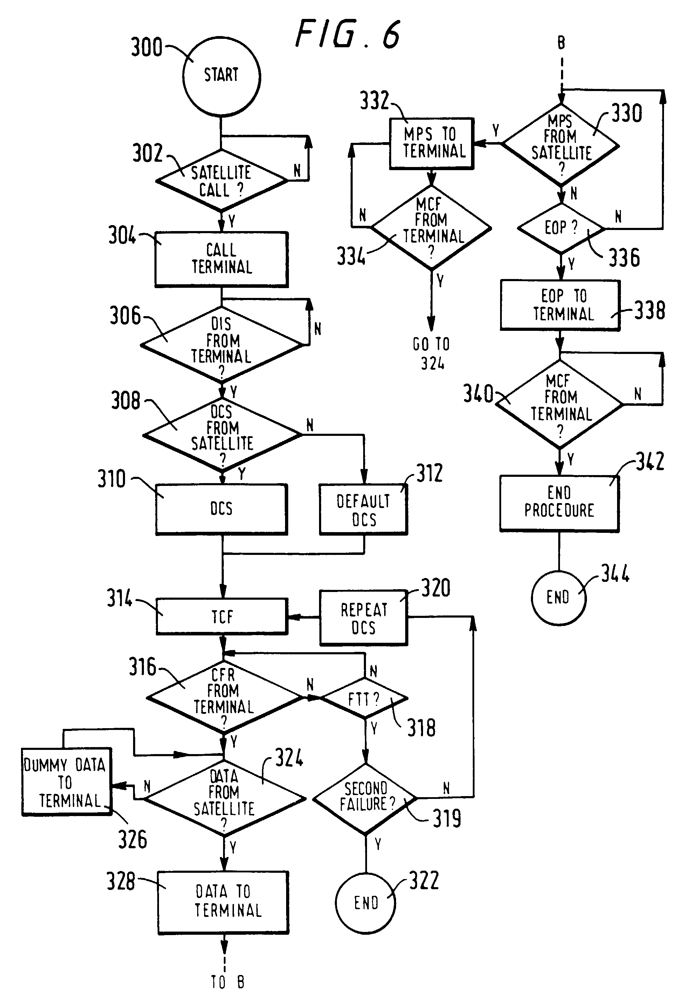

A protocol for a broadcast transmission, in which the T.30 protocol is observed both at the transmitting facsimile terminal 2 and the receiving facsimile terminal 18, is shown by the time chart of Figure 4, in which the connection between the transmitting facsimile terminal 2 and the receiving facsimile terminal 18 is shown in the horizontal direction, while time progresses vertically downwards. The operation of the transmitting FIU 4 is shown in the flowchart of Figure 5 and that of the receiving FIU 16 is shown in the flowchart of Figure 6.

Initially, the receiving FIU 16 is in an "idle" mode (step 302) in which it is ready to receive a facsimile broadcast.

At the beginning of a broadcast transmission, the transmitting facsimile terminal dials a number, as shown by reference 60, which is received by the transmitting earth station interface controller 36 (step 202) and is passed to the ACSE (step 204) to set up a satellite channel. When the transmitting facsimile interface controller 34 detects from the ACSE that a channel is set up, it sends an answering signal 62 to the transmitting facsimile terminal 2. At the same time, the transmitting FIU 4 sends a calling signal 64 across the satellite link to the receiving FIU 16, which is received by the receiving facsimile interface controller 44 (step 302) which sends a ringing signal 66, followed by a calling signal 68 to the receiving facsimile terminal 18 (step 304). In response to the calling signal 68, the receiving terminal 18 sends a CED (called station identification) signal 70 (a 2100 Hz tone), which indicates that the called terminal is a facsimile terminal. The CED signal is ignored by the receiving FIU 16.

However, according to recommendation T.30, the transmitting facsimile terminal 2 will expect to receive a CED tone to indicate that a connection to a facsimile terminal has been made. The transmitting FIU 4 generates a CED signal 72 (step 206) a predetermined period after the transmitting FIU 4 receives a signal from the ACSE to indicate connection to the telephone circuit. In an example, the predetermined interval is 2.5s +/- 1%, and the duration of the CED signal 72 is 3s +/- 1%. The CED signal 72 is received by the transmitting facsimile terminal 2 and the facsimile controller 22 proceeds to the next stage of transmission.

The transmitting FIU 4 then transmits (step 208) a digital identification signal (DIS) 74, which is used in the T.30 protocol to identify the standard capabilities of the called apparatus. In a preferred example, the DIS comprises a facsimile information field (FIF) with the following bits set to "1":
10 (T.4 receiver)
20 (unlimited recording length)
24 (extended field enabled)
32 (extended field enabled).

All other bits in the FIF are set to "0".

Since bits 11 and 12 are set to zero, the DIS 74 indicates that only the lowest data rate of 2400 bit/s (V.27 ter fallback mode) is to be supported in accordance with T.30 Table 2. This arrangement is suitable for communication systems in which only the lowest facsimile data rate is supported, such as INMARSAT-M (TM).

The transmitting facsimile terminal 2 responds to this by transmitting a digital command signal (DCS) 76, which is intended to set up the standard capabilities identified by the DIS in the called terminal. The DCS is passed to the earth station interface controller 36 and is transmitted over the satellite link (steps 210, 212).

In the example shown, the receiving facsimile terminal 18 has not yet transmitted a DIS 78 by the time that the DCS 76 has been received by the receiving FIU 16. The DCS is therefore buffered by the receiving facsimile interface controller 44. If any further DCSs are received over the satellite channel, for example because the transmitting FIU 4 fails to train after receiving the first DCS 76, the further DCS replaces the DCS in the buffer. When a DIS 78 is received (step 306) from the receiving facsimile terminal 18, the receiving FIU 16 transmits the buffered DCS to the receiving facsimile terminal 18 (step 310).

However, if the receiving terminal 18 has generated a DIS 78 before the receiving FIU 16 has received a DCS over the satellite link, there is a danger that the receiving terminal 18 will time out and end the call, because no DCS 76 has been received within a predetermined period of the receiving terminal 18 sending the DIS 78. To prevent this occurring, the receiving FIU 16 generates a default DCS 80 and sends it to the receiving terminal 18 (step 312) if no DCS 76 has been received over the satellite link a short period after the receiving FIU 16 has received a DIS 78 from the receiving terminal 78. If the DCS 76 is received by the receiving FIU 16 after the default DCS 80 is sent to the receiving terminal 18, the DCS 76 is discarded and is not sent to the receiving terminal 18.

In a preferred example, the default DCS 80 comprises a facsimile interface field (FIF) with the following bits set to "1":
10 (T.4 receiver),
20 (unlimited recording length),
24 (extended field enabled),
32 (extended field enabled).

All other bits in the FIF must be set to zero, including bit 23 (40 milliseconds minimum scanline). Preferably, the receiving FIU 16 begins to send the preamble preceding the DCS 150 ms +/- 10 ms from the time at which the last bits of the last flag following the DIS 78 from the receiving terminal 18 were demodulated.

After the transmitting terminal 2 has transmitted the DCS 76, it sends a TCF (training check) signal 82, which is used to check whether the receiving facsimile is receiving correctly at the selected data rate. The transmitting FIU 4 responds to the TCF signal (step 214) with a CFR signal 84 (confirmation to receive) (step 218), or alternatively an FTT (failure to train) signal (step 221) if the TCF signal 82 is not acceptable in quality (step 216). The TCF signal 82 is not transmitted over the satellite link by the transmitting FIU 4. In this example, shown in Figure 4, training is successful and the transmitting FIU 4 responds with the CFR signal 84.

If the transmitting FIU 4 fails to train, the transmitting terminal 2 repeats the DCS 76 and the TCF signal 82 (steps 210 and 214), and the transmitting FIU 4 sends the repeated DCS 76 over the satellite channel. After a predetermined number of failed training attempts, the transmitting terminal 2 will send a DCN (disconnect) signal and disconnect the line.

Any repeated DCS, received over the satellite channel after the DCS 76 or the default DCS 80 is sent to the receiving terminal 18, is discarded by the receiving FIU 16.

At the receiving side of the broadcast link, the receiving FIU 16 generates independently a TCF signal 86 (step 314), preferably 100 ms +/- 10 ms after the preceding DCS 76;80 has been sent to the receiving terminal 18. Preferably, the message portion of the TCF signal 86 generated by the receiving FIU 16 consists of 1500 ms +/- 10 ms of binary "0" bits.

In the example shown in Figure 4, the receiving terminal 18 responds with a CFR signal 88, which is intercepted by the receiving FIU 16 (step 316). However, if the receiving terminal 18 does not receive the TCF signal with sufficient quality, it will send an FTT signal to the receiving FIU 16 (step 318). In that case, the receiving FIU 16 retransmits the DCS signal 76;80 (step 320) followed by the TCF signal (step 314). If the receiving signal still does not transmit a CFR signal (step 319), the receiving FIU 16 terminates the procedure (step 322).

After the transmitting FIU 4 has sent the CFR signal 84, it waits (step 220) to receive facsimile message data from the transmitting terminal 2. When the message data is received, in the format of a training portion 90, a data portion 92, and an RTC (check) portion 94, the transmitting FIU 4 does not immediately broadcast the facsimile message data over the satellite link, because some of the receiving facsimile terminals 18 may not yet be ready to receive the facsimile data. Therefore, the transmitting FIU 4 stores the first page of message data in a buffer (step 222), which may be positioned at any suitable point in the data path through the FIU 4, until a timer in the earth station interface controller 36 has determined that a time t₁ has elapsed sufficient for all of the receiving facsimile terminals 18 to become ready to receive (step 224). In one example, t₁ is at least 40 seconds +/- 250 ms, measured from the calling signal 64 being sent. Once the required time t₁ has elapsed, the transmitting FIU 4 begins to send the facsimile message data 92 and the RTC 94 in the buffer to the earth station 6 for broadcasting over the satellite link (step 226). The buffer continues to buffer data received from the transmitting terminal 2.

Although the delay incurred by the transmitting FIU 4 ensures that even the slowest receiving terminals 18 should be ready to receive message data, some of the receiving terminals 18 will be ready considerably before this stage and, if no message data is received within a predetermined period from the receiving facsimile terminal 18 sending the CFR signal 88, the receiving terminal 18 will time out and end the call. In order to overcome this problem, the receiving FIU 16 begins to generate (step 326) a header portion 96 and dummy facsimile data 98 if no message data is received over the satellite link within a predetermined period of time, preferably 200 ms +/- 10 ms after the last bit of the preceding CFR signal 88 has been demodulated. The dummy message data consists of a repeated line of facsimile data formatted according to CCITT recommendation T.4, for example:
the Huffmann make-up code for white run length 1728;
the Huffmann terminating code for white run length 0;
3000 "0" bits; and
an EOL (end of line) code.
This sequence is repeated until the message data 92 is received on the satellite channel, whereupon the message data 92 is sent to the receiving terminal 18 (step 328).

If the facsimile data 92 to be transmitted consists of more than one page of data, the transmitting terminal 2 transmits an MPS (multi-page signal) after the first page has been sent. According to recommendation T.30, the next page of facsimile data is sent soon after an MCF (message confirmed) signal is received by the transmitting terminal.

However, in the case of broadcast transmission, it is advantageous to delay the transmission of subsequent pages by the transmitting terminal 2 to ensure that all the receiving facsimile terminals 18 are ready to receive the next page and to reduce the amount of message data buffered by the transmitting FIU 4. To this end, the transmitting FIU 4 ignores the first MPS 100 sent by the transmitting terminal 2 (step 228). When the transmitting terminal 2 does not receive a response to the MPS 100 within a predetermined period, it sends a second MPS 102 and the transmitting FIU 4 then responds with an MCF signal 104 (step 232) and sends the MPS signal 102 over the satellite channel for reception by the receiving FIU 16 (step 330), where it is passed to the receiving terminal 18.

The receiving facsimile terminal 18 then responds by sending an MCF signal 106 to the receiving FIU 16. However, if no MCF signal 106 is received by the receiving FIU 16 in response to the first MPS transmitted over the satellite channel, the receiving FIU 16 sends a second MPS to the receiving terminal 18. This is often necessary, because many conventional facsimile terminals activate a paper cutter after each page is printed, and do not receive any signals during this time to avoid interference from the paper cutter. Thus, the first MPS 102 may not be detected by the receiving facsimile terminal 18. The need to send a second MPS to the receiving terminal 18 increases the delay before the receiving terminal 18 is ready to receive, so there is a particular need to delay the transmitting terminal 2 as described above.

However, if an EOP (end of procedure) signal is received (step 229), the transmitting FIU 4 follows an end-of-message procedure as described below (step 244).

After the transmitting facsimile terminal 2 has received the MCF signal 104 from the transmitting FIU 4, it begins to transmit the next page of facsimile data 108 (step 234). However, this page of facsimile data 108 is also buffered in the FIU 4 (step 236) until a predetermined delay t₂ has elapsed (step 238) since the last signal (in this case an MPS signal) was sent over the satellite channel. Preferably, the delay t₂ is at least 11.5s + /- 250 ms. As before, this delay helps to ensure that all the receiving facsimile terminals 18 are ready to receive the next page of data. It is possible, however, that the buffer has not been completely cleared of the first page of message data 92. Preferably, therefore, the buffer is sufficiently large to accommodate several pages or part pages of message data. In one example, the buffer size is 30 kbytes, which typically allows a 20 page facsimile to be sent with the required delays.

The receiving FIU 16 again generates a header portion 109 and dummy message data 110 (step 326) if no data is received over the satellite channel within a predetermined period of the MCF signal 106 being sent by the receiving terminal 18.

If no more message data is to be sent, the transmitting terminal 2 generates an EOP (end of procedure) signal 112 which is buffered by the transmitting FIU 4 until the last page of facsimile data has been sent (step 240, 242). The transmitting FIU 4 then enters the end-of-message procedure. However, if a further page is to be sent, the transmitting terminal 2 sends an MPS signal (step 243) and the transmitting FIU responds to the MPS signal as described above (step 230).

In the end-of-message procedure, the transmitting FIU 4 sends an MCF signal 114 (step 244) to the transmitting terminal 2 in order to comply with recommendation T.30. The transmitting terminal 2 responds by sending a DCN (disconnect) signal 116 to the transmitting FIU 4, and the transmitting terminal 2 then disconnects itself. However, the transmitting FIU 4 does not attempt to signal to the ACSE to clear the satellite channel (at reference 122) until each of the receiving terminals 18 can be expected to have received the last page of data 108. The earth station interface controller 36 includes a timer which times the interval from the last signal being sent over the satellite channel, in order to calculate when the satellite channel may be cleared.

The EOP signal 112 is sent over the satellite channel (step 245) after the facsimile data 108. The receiving FIU 16 receives the EOP signal 112 and passes it to the receiving terminal 18 (steps 336,338). An MCF signal is transmitted by the receiving terminal 18 (step 340). The receiving FIU 16 then completes the end-of-message procedure (step 342).

An aim of the operation of the transmitting FIU 4 and receiving FIU 16, as described above, is to maintain the T.30 protocol at both the transmitting and receiving end of the broadcast link. However, if the satellite channel clears unexpectedly during transmission, the receiving FIU 16 may generate an error message formatted as message data and send the error message for display at the receiving terminal 18. The error message identifies the type of error encountered and optionally the transmitting earth station 6 to which the receiving terminal 18 was previously connected.

If the receiving FIU 16 receives a CRP (command repeat) signal from the receiving terminal 18, the receiving FIU 16 may repeat the previous command to the receiving terminal 18.

If the receiving FIU 16 begins to receive the message data 92,108 over the satellite channel before the receiving facsimile terminal 18 is ready to receive it, the receiving FIU 16 may clear the call. Alternatively, the receiving earth station interface controller 46 may include an input buffer for buffering the message data 92,108 until the receiving terminal 18 is ready to receive message data.

If the receiving FIU 16 detects that the satellite channel connection has been cleared during a period in which no message data is being transmitted, the receiving FIU 16 sends a DCN signal to the receiving facsimile terminal 18 at the next suitable point in the protocol, so as to disconnect the receiving terminal 18. Optionally, the receiving FIU 16 may enter the message phase of the protocol by generating suitable T.30 commands and send an error message to the receiving terminal 18 before the DCN signal.

If the receiving FIU 16 receives the DCS 76 over the satellite channel, but the DCS 76 contains errors, the receiving FIU 15 may generate the default DCS 80 as if no DCS had been received over the satellite channel.

If a corrupted binary coded signal (BCS), which cannot be identified, is received over the satellite channel, and facsimile message data was received immediately previously, the receiving FIU 16 automatically sends an MPS signal to the receiving terminal 18. If, however, message data was not immediately previously received, then the receiving FIU 16 generates the default DCS signal 80 and sends this to the receiving terminal 18.

If the transmitting facsimile interface unit 4 receives a command from the transmitting terminal 2 which is not recognised, the transmitting FIU 4 sends a CRP command to the transmitting terminal 2 so that the command is repeated.

The demodulator 30 and modulator 32 are provided in the FIUs 4,16 since facsimile terminals which are currently available have only an analog interface for use with existing telephone lines. However, if facsimile terminals having a direct digital output were to be used, or if the functions of the input device 20, output device 28 and fax controller 22 are integrated in a computer having a digital interface, the demodulator 30 and modulator 32 could be omitted and the facsimile interface unit 4 could be provided with a digital interface.

Optionally, the transmitting FIU 4 logs details of each broadcast transmission, so that the operation of the transmitting FIU 4 may be monitored and adjusted if necessary.

Although the above embodiment has been discussed with reference to the T.30 protocol, the present invention is not restricted to any particular protocol but the principles of operation of the transmitting FIU 4 and receiving FIU 16 may be adapted to other protocols, whether for facsimile or other image broadcast transmission.

Furthermore, the present invention is applicable to broadcast either by satellite or terrestrial links, and may in particular be applied to terrestrial mobile communications such as GSM.

## Claims

1. Facsimile interface apparatus (16) for connection between a facsimile apparatus (18) and a facsimile broadcast link (10), comprising:
a first interface (46) adapted for connection to the facsimile broadcast link, comprising means for receiving broadcast signals (12) from the broadcast link (10); and
a second interface (44) connected to said first interface (46) and adapted for connection to the facsimile apparatus and operable in duplex mode when said first interface (46) is connected to the broadcast link, comprising means for transmitting signals derived from the broadcast signals (12) to the facsimile apparatus (18), means for receiving facsimile signals from the facsimile apparatus, and means for transmitting response signals to the facsimile apparatus in response to the facsimile signal; wherein the second interface (44) is arranged to generate a holding signal (96, 98) for the fascimile apparatus (18) if the broadcast signal (12) is not received within a predetermined period; characterised in that the holding signal comprises dummy facsimile message data (98).

2. Apparatus as claimed in claim 1, wherein the dummy facsimile message data comprises a repeated line of blank facsimile data.

3. Apparatus as claimed in claim 1 or 2, including a timer responsive to receipt of a predetermined one of the facsimile signals (88), wherein the means for generating the holding signal (96, 98) is arranged to send the holding signal (96, 98) to the facsimile apparatus (18) after a delay determined by the timer.

4. Apparatus as claimed in claim 3, wherein the predetermined facsimile signal (88) indicates that the facsimile apparatus (18) is ready to receive facsimile message data.

5. Apparatus as claimed in any preceding claim wherein the broadcast link is a satellite link (10).

6. A satellite earth station (6) including apparatus (4) as claimed in claim 5.

7. A method of operating a facsimile interface apparatus (16), said apparatus comprising a first interface (46) connected to a facsimile broadcast link (10) and a second interface (44) connected to said first interface (46) and connected to a facsimile apparatus (18) in duplex mode, said method comprising:
detecting (324) whether a broadcast signal (12) is received from the broadcast link (10) within a predetermined period, and, if not, transmitting (326) a holding signal (96, 98) to the facsimile apparatus (18); the method being characterised in that the holding signal comprises dummy facsimile message data (98).

8. A method as claimed in claim 7, wherein the dummy facsimile message data (98) comprises a repeated line of blank facsimile data.

9. A method as claimed in claim 7 or claim 8, including receiving (316) a facsimile signal (88) from the facsimile apparatus (18), and timing said predetermined period from receipt of said facsimile signal (88).

10. A method as claimed in claim 9, wherein the facsimile signal (88) indicates that the facsimile apparatus (18) is ready to receive facsimile message data.

## Patentansprüche

1. Fax-Schnittstellengerät (16) zum Anschluß eines Faxgeräts (18) an eine Fax-Funkverbindung (10), umfassend:
eine erste Schnittstelle (46) für den Anschluß an die Fax-Funkverbindung, die eine Vorrichtung zum Empfang von Sendesignalen (12) von der Funkverbindung (10) aufweist; und
eine an die erste Schnittstelle (46) angeschlossene zweite Schnittstelle (44), die für den Anschluß an das Faxgerät ausgelegt ist und im Duplexmodus betrieben werden kann, wenn die erste Schnittstelle (46) an die Funkverbindung angeschlossen ist, und die außerdem eine Vorrichtung zur Übertragung von aus den Sendesignalen (12) erhaltenen Signalen an das Faxgerät (18), eine Vorrichtung zum Empfang von Faxsignalen vom Faxgerät und eine Vorrichtung zur Übertragung von Antwortsignalen an das Faxgerät in Reaktion auf das Faxsignal aufweist;
wobei die zweite Schnittstelle (44) so ausgelegt ist, daß sie ein Haltesignal (96, 98) für das Faxgerät (18) erzeugt, wenn innerhalb einer vorbestimmten Zeitspanne kein Sendesignal (12) empfangen wird,
dadurch **gekennzeichnet,** daß das Haltesignal Dummy-Faxnachrichtdaten (98) enthält.

2. Gerät nach Anspruch 1, wobei die Dummy-Faxnachrichtdaten eine wiederholte Zeile von Fax-Leerstellendaten enthalten.

3. Gerät nach Anspruch 1 oder 2 mit einem Zeitgeber, der auf den Empfang eines der Faxsignale (88), das zuvor bestimmt wurde, anspricht, wobei die Vorrichtung zur Erzeugung des Haltesignals (96, 98) das Haltesignal (96, 98) nach einer durch den Zeitgeber bestimmten Verzögerung an das Faxgerät (18) sendet.

4. Gerät nach Anspruch 3, wobei das vorbestimmte Faxsignal (88) anzeigt, daß das Faxgerät (18) bereit ist, die Faxnachrichtdaten zu empfangen.

5. Gerät nach einem der vorhergehenden Ansprüche, wobei die Funkverbindung in einer Satellitenverbindung (10) besteht.

6. Satellitenbasisstation (14) mit einem Gerät (16) nach Anspruch 5.

7. Verfahren zum Betrieb eines Fax-Schnittstellengeräts (16) mit einer ersten an eine Fax-Funkverbindung (10) angeschlossenen Schnittstelle (46) und einer zweiten an die erste Schnittstelle (46) und ein Faxgerät (18) im Duplexmodus angeschlossenen Schnittstelle (44), wobei
erfaßt wird (324), ob ein Sendesignal (12) von der Funkverbindung (10) innerhalb einer vorbestimmten Zeitspanne empfangen wurde; und, falls nicht,
ein Haltesignal (96, 98) an das Faxgerät (18) übertragen wird (326);
dadurch **gekennzeichnet,** daß das Haltesignal Dummy-Faxnachrichtdaten (98) enthält.

8. Verfahren nach Anspruch 7, wobei die Dummy-Faxnachrichtdaten eine wiederholte Zeile von Fax-Leerstellendaten enthalten.

9. Verfahren nach Anspruch 7 oder 8, wobei ein Faxsignal (88) des Faxgeräts (18) empfangen wird (316), und nach Erhalt des Faxsignals (88) die vorbestimmte Zeitspanne zeitlich angepaßt wird.

10. Verfahren nach Anspruch 9, wobei das Faxsignal (88) anzeigt, daß das Faxgerät (18) bereit ist, die Faxnachrichtdaten zu empfangen.

## Revendications

1. Appareil formant interface de télécopie (16) destiné à être connecté entre un télécopieur (18) et une liaison de diffusion de télécopie (10), comprenant:
une première interface (46) apte à être connectée à la liaison de diffusion de télécopie, comprenant des moyens pour recevoir des signaux diffusés (12) provenant de la liaison de diffusion (10); et
une deuxième interface (44), connectée à ladite première interface (46), apte à être connectée au télécopieur et utilisable en mode duplex lorsque ladite première interface (46) est connectée à la liaison de diffusion, comprenant un moyen pour transmettre au télécopieur (18) des signaux obtenus à partir des signaux diffusés (12), un moyen pour recevoir des signaux de télécopie provenant du télécopieur, et un moyen pour transmettre des signaux de réponse au télécopieur en réponse au signal de télécopie; la deuxième interface (44) étant conçue pour générer un signal de maintien (96, 98) destiné au télécopieur (18) si le signal diffusé (12) n'est pas reçu au cours d'une période prédéterminée; caractérisé en ce que le signal de maintien comprend des données de message de télécopie fictives (8).

2. Appareil selon la revendication 1, dans lequel les données de message de télécopie fictives comprennent une ligne répétée de données de télécopie vides.

3. Appareil selon la revendication 1 ou 2, incluant un temporisateur répondant à la réception d'un signal prédéterminé (88) parmi les signaux de télécopie, dans lequel le moyen de génération du signal de maintien (96, 98) est conçu pour envoyer le signal de maintien (96, 98) au télécopieur (18) après un retard déterminé par le temporisateur.

4. Appareil selon la revendication 3, dans lequel le signal de télécopie prédéterminé (88) indique que le télécopieur (18) est prêt à recevoir des données de message de télécopie.

5. Appareil selon l'une quelconque des revendications précédentes, dans lequel la liaison de diffusion est une liaison par satellite (10).

6. Station terrienne de satellite (14) incluant un appareil (16) selon la revendication 5.

7. Procédé d'exploitation d'un appareil formant interface de télécopie (16), ledit appareil comprenant une première interface (46) connectée à une liaison de diffusion de télécopie (10) et une deuxième interface (44) connectée à ladite première interface (46) et connectée à un télécopieur (18) en mode duplex, ledit procédé comprenant le fait de:
détecter (324) si un signal diffusé (12) est reçu par la liaison de diffusion (10) au cours d'une période prédéterminée, et, dans le cas contraire, transmettre (326) un signal de maintien (96, 98) au télécopieur (18); le procédé étant caractérisé en ce que le signal de maintien comprend des données de message de télécopie fictives (98).

8. Procédé selon la revendication 7, dans lequel les données de message de télécopie fictives (98) comprennent une ligne répétée de données de télécopie vides.

9. Procédé selon la revendication 7 ou 8, incluant le fait de recevoir (316) un signal de télécopie (88) provenant du télécopieur (18), et de mesurer ladite période prédéterminée à partir de la réception dudit signal de télécopie (88).

10. Procédé selon la revendication 9, dans lequel le signal de télécopie (88) indique que le télécopieur (18) est prêt à recevoir des données de message de télécopie.
